# EUROPEAN PATENT SPECIFICATION

(11) **EP 0 819 057 B1**
(45) Date of publication and mention of the grant of the patent: **06.06.2001**
(21) Application number: 96907497.0
(22) Date of filing: 18.03.1996
(51) Int. Cl.: B32B 27/32, B32B 27/18

(54) **STRETCH WRAP FILM**
SPANNWICKELFILM
FILM D'ENVELOPPEMENT ETIRABLE

(30) Priority: 18.03.1995 GB 9505524
(43) Date of publication of application: 21.01.1998
(73) Proprietor: ITW MIMA FILMS LLC, Glenview, Illinois 60025 (US)
(72) Inventor: MAKA, Xavier, F-54260 Longuyon (FR)
(74) Representative: Rackham, Stephen Neil
(86) International application number: EP9601160
(87) International publication number: WO9629203

(56) References cited:
- EP-A- 0 268 422
- EP-A- 0 287 272
- EP-A- 0 317 166
- WO-A-95/15851
- WO-A-95/16729
- US-A- 4 518 654
- US-A- 5 093 188
- US-A- 5 175 049

## Description

THIS INVENTION relates to stretch wrap. More particularly, this invention relates to stretch wrap film not only with very good mechanical properties but also with low noise.

Stretch wrap films have an established and developing commercial end-use for overwrap of goods. This includes the packaging of foodstuffs and the bundling of goods for shipping and storage : for example, the bundling of bulky amounts of woven goods such as cloth and carpets, and, in particular, the unitising of pallet loads. There is a variety of overwrapping techniques for unitising with stretch wrap film. Essentially, they involve anchoring one end of a continuous roll of stretch wrap film to the pallet and unrolling the continuous roll, usually with stretching and with relative motion between the roll and the pallet, so that the stretched film wraps the pallet and its load and thereby unitizes it.

All currently available stretch wrap films, on unrolling with stretching, emit an unacceptably high level of noise. Attempts have been made to reduce this by interposing an acoustic barrier between the operator and the stretch wrap film when in service.

European patent 0 147 088 discloses a stretch wrap film having one-sided cling comprising a transparent thermoplastic A/B film structure wherein the exposed surface of layer A, in its stretched condition, has a comparatively high cling force to the exposed surface of layer B and the exposed surface of layer B has at least substantially no cling force to a layer of itself and has a slide property when the exposed surface of layer B is in contact with a layer of itself with relative motion therebetween.

This invention seeks to provide a film composition which not only has a good balance of required mechanical properties but also exhibits low noise in service.

According, therefore, to the present invention, there is provided a stretch wrap plastics film having
i) on one side, a cling layer comprising a polymer of ethylene of ultra low density (ULDPE) having a density from 860 to 890kg/m³;
ii) on the other side, a slip layer comprising a low density (high pressure) polyethylene (LDPE) comprising a solid particulate antiblock; and
iii) a core layer interposed between the cling layer and the slip layer, the core layer comprising linear low density polyethylene (LLDPE).

Preferably the cling layer is prepared by polymerising ethylene using metallocene catalysis.

Polymers useful as the cling layer polymer may be prepared by copolymerising ethylene with a sufficient amount of at least one straight or branched chain α-olefin to cause the density to be from 860 to 890 kg/m³. For example, the polymer may be a terpolymer of a longer (eg. C₈ to C₁₂) α-olefin with one or more C₃ to C₆ α-olefins. Such materials are preparable using modified Ziegler catalysts (metallocene catalysts) which can comprise one or more transition metal or lanthanide metal atoms Π-bonded to one or more mono- or polynuclear ligands including a cyclopentadienyl group. The ligand is typically bulky and may include a constraint-inducing moiety. Examples of such processes are disclosed in WO 93/08221 and WO 95/07939.

By "low density (or high pressure) polyethylene (LDPE)" is meant herein a homopolymer of ethylene prepared using a free-radical initiator and high polymerisation pressure. LDPE's are found to have numerous long-chain branches in their molecular structure. Such polymers are readily available commercially.

By "linear low density polyethylene (LLDPE)" is meant herein a copolymer of ethylene with a minor amount, typically less than 20 wt.% of a C₃ to C₁₂ α-olefin. Such polymers are substantially linear in that they have generally no more than 3 long chains per 1000 backbone carbon atoms. They may be prepared by Ziegler-Natta or Phillips coordination catalysis and have a density from 916 to 950 kg/m³. Such polymers are also readily available commercially.

With regard to the slip layer ii) the LDPE may be blended with another olefin polymer. Where this is done this may suitably be linear low density polyethylene (LLDPE). However, it is preferred that the LDPE constitutes at least 60 wt.% of the olefin polymer material in slip layer ii). Suitably, the slip layer constitutes from 7.5 to 15% of the total thickness of the stretch wrap plastics film as supplied. The antiblock in ii) may suitably comprise a siliceous material, such as silica. Desirably, the antiblock should be present in amount from 100 to 10,000, preferably from 500 to 2,500 ppm of the slip layer by weight.

An attractive feature of the stretch wrap plastics films of this invention is that while they may comprise, in i), added cling agent such as polyisobutylene (PIB), it is preferred that no added cling agent is present in i).

Suitable cling agents include low molecular weight polyolefins such as amorphous polypropylene of molecular weight less than 5000 and polyisobutylene; terpene resins; hydrogenated rosin and rosin esters; or microcrystalline wax.

The films of this invention may be prepared either by blown film or cast film technology.

In accordance with a further aspect of this invention, there is provided the use of the stretch wrap plastic film as described above in order to unitise pallet loads with a reduced level of noise. Preferably the level of noise should be reduced to a level from 90 to 85 dB.

The following Examples illustrate the invention.

In preparing the ABC extrudates of the present invention core layer formulation can be fed into the feed hopper of a conventional rotating screw extruder. The extruder screw employed can have a 15 cm (6 inch) diameter and a length to diameter ratio of about 24:1. Satellite extruders are employed for the extrusion of the cling and slip layers. The satellite extruders each comprise a conventional extruder having an extruder screw with a 7.8 cm (3.5 inch) diameter and a length to diameter ratio of about 24:1. Molten resin streams from the satellite extruders are fed into a cast film die affixed to the end of the core extruder through an adaptor specifically designed to join the streams from the satellite extruder to the core stream so that they interface with the molten surface of the core layer.

In these Examples the layers were :

### COMPARATIVE EXAMPLE 1

| | | |
|---|---|---|
| Cling layer A | 7.5 | ethylene/methyl acrylate copolymer (EMA) comprising 28 wt.% copolymerised methyl acrylate EXXON XC 101 : 100% |
| | | |
| Core layer B | 77.5 | linear low density polyethylene (LLDPE) BP 7209 : 100% |
| | | |
| Slip layer C | 15 | LLDPE DOW 2045/low density (high pressure) polyethylene (LDPE) BP 5320 : blend 75/25. |

### EXAMPLE 2

| | | |
|---|---|---|
| Cling layer A | 10 | ultra low density polyethylene (ULDPE) DOW KC 88 52 : 100% |
| | | |
| Core layer B | 75 | as Comparative Example 1. |
| | | |
| Slip layer C | 15 | LDPE BP 5320 : 100% polymer plus 3000 ppm talc. |

### EXAMPLE 3

| | | |
|---|---|---|
| Cling layer A | 10 | as Example 2. |
| | | |
| Core layer B | 75 | as Comparative Example 1. |
| | | |
| Slip layer C | 15 | as Example 3 but with 1500 ppm talc instead of 3000 ppm. |

**TABLE 1**

| EXAMPLE | CLING | SLIP | UNWIND FORCE (daN) | NOISE (dB) |
|---|---|---|---|---|
| CE1 | very good | OK | 5.7 | 103 |
| | | | | |
| 2 | good | OK | 3.0 | 96 |
| | | | | |
| 3 | very good | OK | 4.45 | 85 |

### EXAMPLE 4

| | |
|---|---|
| Cling layer A | ULDPE DOW INSITE POE density 875 kg/m³ prepared by metallocene catalysis. |
| | |
| Core layer B | as Comparative Example 1. |
| | |
| Slip layer C | as Example 3 |

### COMPARATIVE EXAMPLE 5

| LAYER | COMPOSITION |
|---|---|
| Cling layer A | LLDPE density 903 kg/m³ |
| | |
| Core layer B | as Comparative Example 1. |
| | |
| Slip layer C | as Example 3 |

The results are shown in the following Table 2.

**TABLE 2**

| EXAMPLE | CLING | SLIP | UNWIND FORCE (daN) | NOISE (dB) | HAZE (ASIM 1003) |
|---|---|---|---|---|---|
| 4 | very good | OK | 4.5 | 85 | 3.6 |
| | | | | | |
| CE 5 | poor | OK | 1.6 | 88 | 4.6 |

## Claims

1. A stretch wrap plastics film having
i) on one side, a cling layer comprising a polymer of ethylene of ultra low density (ULDPE) having a density from 860 to 890 kg/m³;
ii) on the other side, a slip layer comprising a low density (high pressure) polyethylene (LDPE) comprising a solid particulate antiblock; and
iii) a core layer interposed between the cling layer and the slip layer, the core layer comprising linear low density polyethylene (LLDPE).

2. A stretch wrap plastics film according to claim 1, wherein the ULDPE is obtainable by polymerising ethylene using metallocene catalysis.

3. A film according to any preceding claim, wherein the LDPE is blended with another olefin polymer.

4. A film according to claim 3, wherein the other olefin polymer is linear low density polyethylene (LLDPE).

5. A film according to claim 3 or 4, wherein the slip layer blend contains at least 60 wt% LDPE, based on the total weight of the slip layer.

6. A film according to any preceding claim, wherein the antiblock comprises a siliceous material.

7. A film according to any preceding claim, wherein the antiblock constitutes from 100 to 10000 ppm of the slip layer by weight.

8. A film according to claim 7, wherein the antiblock constitutes from 500 to 2500 ppm of the slip layer by weight.

9. A film according to any preceding claim which comprises no added cling agent.

10. A film according to any preceding claim which is a blown film.

11. A film according to any one of claims 1 to 9 which is a cast film.

12. Use of stretch wrap plastic film as defined in any one of the preceding claims in order to unitize pallet loads with a reduced level of noise.

## Patentansprüche

1. Streckverpackungsfolie aus Kunststoff,
i) auf der einen Seite mit einer Haftschicht, umfassend ein Ethylenpolymer höchst niedriger Dichte (ULDPE) mit einer Dichte von 860 bis 890 kg/m³;
ii) auf der anderen Seite mit einer Gleitschicht, umfassend ein Polyethylen niedriger Dichte (hohen Drucks) (LDPE), umfassend ein festes disperses Antiblockiermittel; und
iii) mit einer zwischen der Haftschicht und der Gleitschicht liegenden Kernschicht, wobei die Kernschicht lineares Polyethylen niedriger Dichte (LLDPE) umfaßt.

2. Streckverpackungsfolie aus Kunststoff gemäß Anspruch 1, bei der das ULDPE durch Polymerisierung von Ethylen unter Anwendung einer Katalyse mit Metallocen gewonnen werden kann.

3. Folie gemäß einem vorhergehenden Anspruch, bei der das LDPE mit einem anderen Olefinpolymer gemischt ist.

4. Folie gemäß Anspruch 3, bei der das andere Olefinpolymer lineares Polyethylen niedriger Dichte (LLDPE) ist.

5. Folie gemäß Anspruch 3 oder 4, bei der die Gleitschichtmischung wenigstens 60 Gew.-% LDPE enthält, bezogen auf das Gesamtgewicht der Gleitschicht.

6. Folie gemäß einem vorhergehenden Anspruch, bei der das Antiblockiermittel ein siliciumdioxidhaltiges Material umfaßt.

7. Folie gemäß einem vorhergehenden Anspruch, bei der das Antiblockiermittel 100 bis 10 000 Gew.-ppm der Gleitschicht ausmacht.

8. Folie gemäß Anspruch 7; bei der das Antiblockiermittel 500 bis 2 500 Gew.-ppm der Gleitschicht ausmacht.

9. Folie gemäß einem vorhergehenden Anspruch, die kein zugesetztes Haftmittel umfaßt.

10. Folie gemäß einem vorhergehenden Anspruch, die eine Blasfolie ist.

11. Folie gemäß einem der Ansprüche 1 bis 9, die eine Gießfolie ist.

12. Verwendung einer Streckverpackungsfolie aus Kunststoff gemäß der Definition in einem der vorhergehenden Ansprüche, um Palettenladungseinheiten mit einem verminderten Geräuschpegel zu bilden.

## Revendications

1. Film d'emballage étirable en matière plastique ayant
i) sur une face, une couche d'accrochage comprenant un polymère d'éthylène de densité très basse (ULDPE) ayant une densité de 860 à 890 kg/m³ ;
ii) sur l'autre face, une couche de glissement comprenant un polyéthylène de basse densité (haute pression) (LDPE), comprenant un agent antibloquant particulaire solide ; et
iii) une couche centrale interposée entre la couche d'accrochage et la couche de glissement, la couche centrale comprenant un polyéthylène linéaire de basse densité (LLDPE).

2. Film d'emballage étirable en matière plastique selon la revendication 1, le ULDPE pouvant être obtenu par polymérisation d'éthylène en utilisant une catalyse avec un métallocène.

3. Film selon l'une quelconque des revendications précédentes, dans lequel le LDPE est mélangé avec un autre polymère oléfinique.

4. Film selon la revendication 3, dans lequel l'autre polymère oléfinique est un polyéthylène linéaire de basse densité (LLDPE).

5. Film selon la revendication 3 ou 4, dans lequel le mélange de la couche de glissement contient au moins 60 % en poids de LDPE par rapport au poids total de la couche de glissement.

6. Film selon l'une quelconque des revendications précédentes, dans lequel l'agent antibloquant comprend une matière siliceuse.

7. Film selon l'une quelconque des revendications précédentes, dans lequel l'agent antibloquant constitue de 100 à 10 000 ppm par rapport au poids de la couche de glissement.

8. Film selon la revendication 7, dans lequel l'agent antibloquant constitue de 500 à 2500 ppm par rapport au poids de la couche de glissement.

9. Film selon l'une quelconque des revendications précédentes, ne comprenant pas d'agent d'accrochage.

10. Film selon l'une quelconque des revendications précédentes, qui est un film soufflé.

11. Film selon l'une quelconque des revendications 1 à 9, qui est un film coulé.

12. Utilisation d'un film d'emballage étirable en matière plastique selon l'une quelconque des revendications précédentes de façon à unifier les charges de palettes avec un niveau réduit de bruit.
